(19) Europäisches Patentamt
European Patent Office
Office européen des brevets

(11) **EP 4 769 384 A1**

(12) **EUROPEAN PATENT APPLICATION**

(43) Date of publication:
**01.07.2026 Bulletin 2026/27**

(21) Application number: 25225863.7

(22) Date of filing: **19.12.2025**

(51) International Patent Classification (IPC):
**G10H 1/00** *(2006.01)* **G10H 1/055** *(2006.01)*
**G06F 3/0362** *(2013.01)* **G06F 3/039** *(2013.01)*
**G06F 3/042** *(2006.01)*

(52) Cooperative Patent Classification (CPC):
**G10H 1/0066; G06F 3/0362; G06F 3/0393;**
**G06F 3/0421; G10H 1/0553;** G10H 2220/096;
G10H 2220/161; G10H 2220/391; G10H 2220/415;
G10H 2220/441

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **30.12.2024 IT 202400030165**

(71) Applicant: **Pavanelli, Isacco**
**46028 Sermide e Felonica (MN) (IT)**

(72) Inventor: **Pavanelli, Isacco**
**46028 Sermide e Felonica (MN) (IT)**

(54) **INTERACTIVE SYSTEM FOR MUSIC PERFORMANCE**

(57) The invention describes an advanced musical control system based on the identification and tracking of physical objects on an infrared touch surface.

Traditional musical controllers offer limited control possibilities. Existing controllers based on object tracking systems, on the other hand, are often bulky (when based on visual detection) or restricted to the use of conductive materials (in the case of capacitive controllers).

In the proposed solution, object tracking is achieved by identifying groups of points (protrusions on the objects themselves) through an infrared detection system.

The geometric configurations of these points uniquely identify and localize the objects, making it possible to detect data that, once processed through suitable protocols such as MIDI, TUIO, or equivalents, allow the user to control up to three sound parameters with each hand.

The invention is intended for interactive musical performance and enables intuitive and compact control of sound parameters through physical objects.

**Fig.2**

## Description

Technical field

The invention concerns the field of music technology and, in particular, systems for recognizing and tracking objects on touch surfaces, with specific applications for the control of sound parameters and real-time musical interaction.

Background art

Several devices for controlling musical parameters exist on the market. These, commonly referred to under the generic denomination "MIDI controllers," are mostly composed of knobs, faders, and in some cases xy controllers, which allow smooth control of one parameter at a time with each hand, or at most two parameters in the case of xy controls.

The device known as "Reactable" departs from this model and uses a system for recognizing and tracking objects positioned on a control surface. The objects are recognized by means of a vision algorithm generally known as "fiducial tracking." This system requires the use of special symbols applied to the objects, which are recognized by software that processes the signal from a camera placed beneath a transparent or semi-transparent surface. This setup requires placing the camera at a certain distance, imposing rather large size on the instrument.

Other devices that have appeared on the market, such as the ROTOR product by Reactable, use an object-recognition system on capacitive touch surfaces. These systems necessarily require the use of electrically conductive objects in order to activate recognition and tracking.

Technical problem to be solved

Object-recognition and tracking systems offer, compared to traditional MIDI controllers, the possibility to control many musical parameters simultaneously: since each object has three degrees of freedom (x-position, y-position, and rotation angle), the performer can smoothly control up to three independent sound parameters with a single hand. This would be very difficult, or at least very inconvenient, with a traditional controller.

Object-tracking systems based on camera vision overcome the limitations of traditional MIDI controllers but require significant bulk to position the camera at the proper distance from the support surface. These systems also require the support surface to be necessarily transparent or semi-transparent, and always clean, to ensure proper camera visibility. Other solutions, such as placing the camera above the support surface, are influenced by ambient light and prevent the performers from placing their hands between the overhead camera and the objects. Finally, capacitive touch systems require electrically conductive objects, preventing the use of materials such as non-conductive plastics (most common plastics such as PE, PVC, PMMA, PTFE, PA, etc.), wood, PLA from additive manufacturing (3D printing), ceramic, cork, cardboard, glass, and many others.

Technical solution

The invention proposes a compact, versatile and intuitive solution that overcomes these issues, enabling advanced musical control. The limitations of traditional musical controllers and the drawbacks of the other cited systems are in fact overcome by introducing an object-tracking system based on infrared detection. The recognition is done through two or more protrusions placed on each object and arranged according to unique geometric configurations. When such protrusions are simultaneously detected by the infrared tracking system, they allow the object to be uniquely identified and its spatial coordinates as well as its angular orientation to be determined. This enables each object used during musical performance to control up to three independent musical parameters with a single hand, without requiring bulky installations.

Description of the drawings

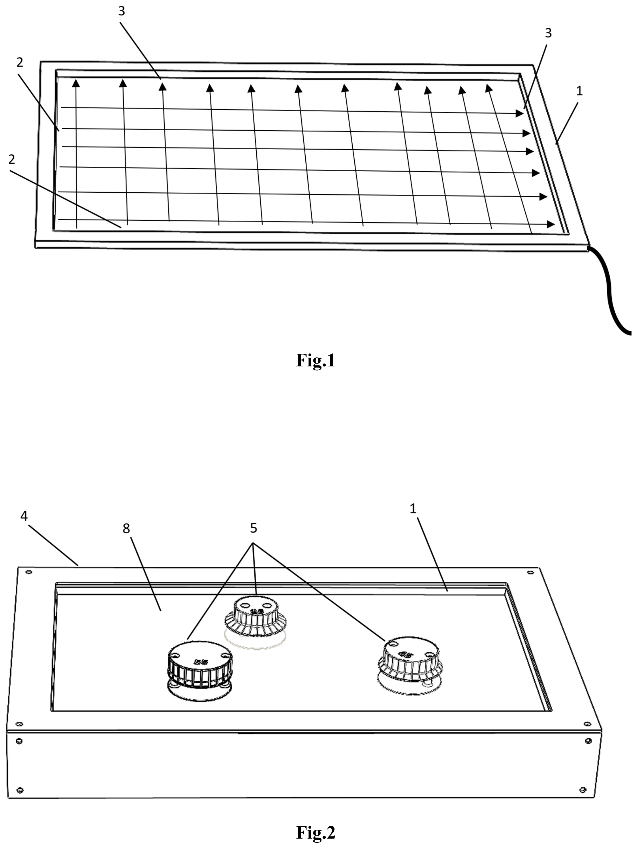

**Fig.1:** Infrared touch frame: a set of infrared emitters (2) and receivers (3) arranged along the border of a frame to form a grid of beams. When an object interrupts one or more of these beams, the system calculates the (x, y) position of the contact points. It can detect multiple points simultaneously.

**Fig.2:** Example configuration of the system (4), comprising the touch frame (1), support surface (8) and musical-control objects (5).

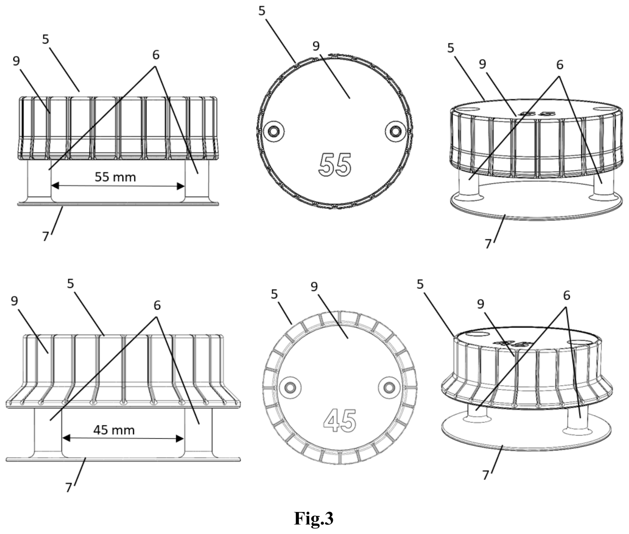

**Fig.3:** Example of musical-control objects (5) comprising two protrusions (6), a support base (7) and a handle (9). The protrusions of the object shown in the upper part of the figure are at a different distance from each other compared to those of the object in the lower part. This difference enables the detection system to distinguish one object from another.

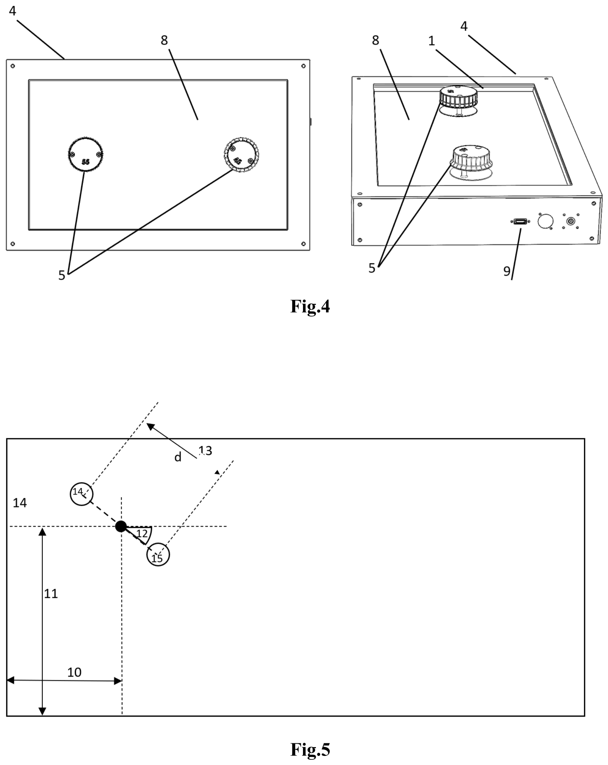

**Fig.4:** Another view of the system (4), comprising the touch frame (1), support surface (8), musical-control objects (5), and connectors for connection to a computer.

**Fig.5:** Recognition of the object and determination of horizontal position "x" (10), vertical position "y" (11), and angle with respect to the horizontal "α" (12) based on the arrangement of protrusions A (14) and B (15): the infrared touch frame provides the coordinates of the two protrusions A (14) and B (15). From these values it is possible to identify the object by determining the distance "d" between the protrusions (13) (each object has protrusions at a different distance "d").

Furthermore, the object can be located and its angular position determined with the following simple calculations:

$$d = [(x_A - x_B)^2 + (y_A - y_B)^2]^{1/2}$$

$$x = (x_A + x_B) / 2$$

$$y = (y_A + y_B) / 2$$

Detailed description of the invention

The invention concerns an innovative system for recognizing and tracking objects on an infrared touch surface, specifically designed for musical applications such as controlling sound parameters, playing musical notes, triggering rhythmic and melodic sequences, and communicating with external devices such as computers, synthesizers, or samplers.

An infrared touch device (Fig. 1) consists of a rectangular frame (1) (or of another shape, as required) surrounding the support surface (8). This frame integrates a series of infrared emitters (2) and receivers (3) arranged along the border so as to create a grid of beams that covers the entire detection area. When an object interrupts one or more of these beams, the system can accurately calculate the two-dimensional position (x and y) of the contact points (or, more precisely, points of interruption within the detection area), identifying multiple points simultaneously. An infrared touch frame is generally connected to a computer (or similar data-processing unit) where software makes the detected signals available to the user.

The system of the present invention (4) (Fig.2 and Fig.4) is composed of an infrared-beam touch surface that recognizes physical objects (5) by tracking pairs (or groups) of detection points (protrusions) located on each object.

The proposed system offers advantages over instruments such as the Reactable, which uses a recognition system based on fiducial tracking. That technology requires applying special symbols ("fiducials") to the objects and a camera placed beneath a transparent or semi-transparent surface. This configuration, however, implies significant bulk and construction constraints such as the need for a transparent surface that must always remain sufficiently clean.

On the contrary, the system of the present invention eliminates this need: object recognition is performed via a low-profile infrared touch frame (1), only a few centimetres thick, allowing a far more compact configuration and eliminating the need for transparent support surfaces.

Some devices, such as the ROTOR system by Reactable, rely on capacitive touch surfaces for object recognition. These systems require exclusively conductive materials to ensure proper function. The proposed invention overcomes this limitation by using an infrared touch frame, which allows recognition of objects regardless of their electrical conductivity, increasing usability flexibility and reducing material constraints.

In this object-detection system (4), each object (5) is equipped with two or more protrusions (6) arranged at predefined distances and configured so that the system can uniquely identify the objects based on the arrangement of the protrusions. Each object indeed has two or more protrusions arranged differently so that the recognition system can distinguish the objects from one another. The system enables the use of multiple objects (5) simultaneously, offering an interactive and intuitive control of sound applications. The invention provides that each musical-control object be equipped with protrusions that, in addition to allowing specific identification of the object based on relative distances, also provide information on the angular orientation of the object on the touch surface.

In the case of an object with two protrusions, the orientation can be precisely determined, ideally between 0 and 180 degrees (actually between 0 and [180 - r], where "r" is the resolution with which the angle is measured), allowing the system to detect the tilt of the object across a semicircle (Fig.5). However, for configurations requiring full angular determination, objects with three or more protrusions, arranged to form an irregular polygon, may be used, allowing the system to detect a full angular orientation, ideally from 0 to 360 degrees (actually from 0 to [360 - r]).

The protrusions described may have different shapes including, but not limited to, the shape of cylindrical stems (6) connected to the base of the object, parallel to one another and perpendicular to the support surface (Fig. 3).

The musical-control objects may also include a support base (7), which enables stable placement on the support surface (8) and thin enough to be ignored by the infrared detection system; from this base the protrusions for detection extend upwards. Above the protrusions, outside the detection area, a handle (9) may be placed to allow the performer to easily manipulate the object. In some embodiments, the support base may be composed of separate parts, one for each protrusion. In other embodiments, where objects are equipped with three protrusions arranged so as to ensure stable support, the objects may even be without a support base.

The system also includes an interface (9) for connection to a computing system (computer or similar device) that communicates with the infrared detection device. In some embodiments, the support surface (8) may be integrated with a visual display connected to the same computer as the infrared touch detection system, on which graphic information is displayed in real time in response to the musical-control objects placed within the detection area.

The system is designed to offer highly versatile musical control, suitable for playing single notes, sound sample, sequences of notes or samples, and for manipulating sound parameters and effects in real time including, but not limited to, volume, delay, reverb, distortion. Any other parameter may be controlled in this way. Unlike standard controllers, which limit control to one or two variables per hand, this invention allows each object to adjust up to three independent parameters by using the x and y coordinates of the object's position on the surface and its angular position.

This means that, by using two objects (and therefore both hands), the user can control up to six parameters simultaneously, a significant advantage over traditional controllers. In traditional setups, controlling three or more parameters simultaneously would require using multiple knobs or faders, a complex task to perform with one hand. With this system, instead, each movement of an object can be interpreted as an action on multiple musical parameters, making interaction intuitive, fluid, and reducing the user's workload.

Furthermore, thanks to the ability to map each object to different parameters via communication protocols such as MIDI, OSC or TUIO, the system is compatible with a wide range of musical software and sound devices, offering users great creative freedom.

Advantages of the invention

- Simultaneous and intuitive control of multiple musical parameters: each object can manage three parameters based on its x and y coordinates and rotation angle, allowing smooth and immediate control over a wide range of sound variables.
- Reduced complexity compared to traditional controllers: the system allows control of multiple parameters through natural movements, avoiding the complex task of turning multiple knobs simultaneously.
- Versatile applications: suitable for playing notes, samples, sequences, and for controlling musical effects, ensuring broad and immediate creative control.
- Multi-protocol compatibility: thanks to MIDI, TUIO, and other communication protocols, the system can be easily integrated with various software and devices, increasing its usability and the possibilities to integrate it in complex musical setups.
- Compactness: unlike vision-based systems with cameras, which require large installation spaces, the system of the present invention is extremely compact due to the thin infrared touch frame.
- Independence from object materials: unlike capacitive systems that require conductive objects, the infrared system allows the use of a wide variety of materials regardless of electrical conductivity, making it more versatile and practical.
- Intuitive and advanced musical control: by positioning the objects, the invention enables control of multiple musical parameters (such as volume, delay, reverb, and distortion) using the position and orientation of each object on the touch surface.

This invention therefore offers an efficient, intuitive, and compact solution for musical control, enabling natural and precise interaction that expands the user's creative possibilities.

## Claims

1. A system for detecting and tracking objects (4) aimed at controlling musical or sound parameters, **characterized by:**

   - an infrared touch detection system (1) configured to identify and track multiple points on a flat surface and to determine their position through communication with a computer or external device, wherein:

     ○ the structure comprises a closed contour surrounding a detection area intended for the placement of one or more objects;
     ○ an appropriate wired or wireless communication system enables the transfer of information about the objects placed in the detection area to a computer or other suitable information processing device;

   - a supporting surface (8), configured to sustain the infrared detection system and provide a stable base for positioning within it the objects for musical control (5);
   - one or more objects for musical control (5), each configured to provide data on three independent parameters (x position, y position, and angle of rotation), which are interpreted to control musical parameters each comprising:

     ○ two or more protrusions (6) arranged in a predefined pattern and configured to be detected by the infrared detection system;
     ○ a support structure configured to connect and stabilize the protrusions.

2. A system (4) according to claim 1, **characterized in that** said system is connected to a computer equipped with software capable of:

- receiving and interpreting signals from the infrared detection system, recognizing and locating the objects for musical control (5) placed on the supporting surface (8);
- sending signals to musical performance applications and/or external musical instruments via communication protocols such as, but not limited to, MIDI, OSC, TUIO.

3. A system (4) according to claim 2, **characterized in that** the supporting surface consists of a visual display on which graphic information is displayed in real time in response to the musical control objects (5) placed in the detection area, including, but not limited to, graphical effects around the objects, values of active musical parameters, and other information.

4. A system (4) according to claim 1, **characterized in that** the control of musical parameters integrates, in addition to inputs derived from the use of musical control objects (5), additional touch inputs performed directly on the supporting surface with one or more fingers or with a touch stylus or with any object big enough to be detected by the infrared detection system (1).

5. A system (4) according to claim 3, **characterized in that** the screen is configured to display interactive control elements which, when activated through touch input, allow access to additional features and/or modification of musical parameters.

6. A system (4) according to claim 1, **characterized in that** the musical control objects (5) are dismountable and/or customizable, allowing users to modify or customize the arrangement and dimensions of the protrusions (6) to achieve personalized musical control configurations.

7. A system (4) according to claim 1, **characterized in that** the musical control objects (5) are equipped with a handle (9) placed above the protrusions (6) and remaining outside the detection field of the infrared device when the object is positioned on the supporting surface (8).

8. A system (4) according to claim 2, **characterized in that** the software includes a calibration algorithm configured to automatically or manually update the detection parameters of each musical control object (5).

**Fig.1**

**Fig.2**

**Fig.3**

Fig.4

Fig.5

Europäisches
Patentamt

European
Patent Office

Office européen
des brevets

# EUROPEAN SEARCH REPORT

**Application Number**

EP 25 22 5863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/002487 A1 (MILES ALEX [GB]) 1 January 2015 (2015-01-01) * abstract; figures 1-18 * * paragraphs [0002] - [0023] * * paragraphs [0040] - [0093] * ----- | 1-8 | INV. G10H1/00 G10H1/055 G06F3/0362 G06F3/039 G06F3/042 |
| X | US 2011/018824 A1 (KANG JUNG-MIN [KR] ET AL) 27 January 2011 (2011-01-27) * abstract; figures 1-9 * * paragraphs [0006] - [0024] * * paragraphs [0049] - [0102] * ----- | 1-8 | |
| A | US 2016/364083 A1 (LIU YUN-CHENG [TW] ET AL) 15 December 2016 (2016-12-15) * abstract; figures 1-8 * * paragraphs [0006] - [0010] * * paragraphs [0024] - [0036] * ----- | 1-8 | |
| A | US 2014/112499 A1 (LINTZ STEVEN ANDREW [US] ET AL) 24 April 2014 (2014-04-24) * abstract; figures 1-13 * * paragraphs [0018] - [0047] * ----- | 1-8 | TECHNICAL FIELDS SEARCHED (IPC) G10H G06F |
| A | "reacTIVision: a computer-vision framework for table-based tangible interaction", TANGIBLE AND EMBEDDED INTERACTION ARCHIVE PROCEEDINGS OF THE 1ST INTERNATIONAL CONFERENCE ON TANGIBLE AND EMBEDDED INTERACTION, ACM, NEW YORK, NY, USA, 15 February 2007 (2007-02-15), pages 69-74, XP002579861, ISBN: 978-1-59593-619-6 * abstract; figures 1-2 * * pages 1-3 * ----- | 1-8 | |

The present search report has been drawn up for all claims

| Place of search | Date of completion of the search | Examiner |
|---|---|---|
| Munich | 27 April 2026 | Lecointe, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 22 5863

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2026

| Patent document cited in search report | Publication date | Patent family member(s) | Publication date |
|---|---|---|---|
| US 2015002487 A1 | 01-01-2015 | CA 2862234 A1 | 25-07-2013 |
| | | CN 104321724 A | 28-01-2015 |
| | | CN 107102780 A | 29-08-2017 |
| | | CN 107122063 A | 01-09-2017 |
| | | EP 2805221 A1 | 26-11-2014 |
| | | EP 3454188 A1 | 13-03-2019 |
| | | ES 2722804 T3 | 16-08-2019 |
| | | GB 2498601 A | 24-07-2013 |
| | | GB 2498716 A | 31-07-2013 |
| | | HK 1204499 A1 | 20-11-2015 |
| | | JP 6051235 B2 | 27-12-2016 |
| | | JP 2015505624 A | 23-02-2015 |
| | | PL 2805221 T3 | 30-04-2019 |
| | | PT 2805221 T | 21-01-2019 |
| | | US 2015002487 A1 | 01-01-2015 |
| | | US 2017160822 A1 | 08-06-2017 |
| | | WO 2013108002 A1 | 25-07-2013 |
| US 2011018824 A1 | 27-01-2011 | EP 2287712 A2 | 23-02-2011 |
| | | KR 20110009973 A | 31-01-2011 |
| | | US 2011018824 A1 | 27-01-2011 |
| US 2016364083 A1 | 15-12-2016 | CN 106249966 A | 21-12-2016 |
| | | TW 201643663 A | 16-12-2016 |
| | | US 2016364083 A1 | 15-12-2016 |
| US 2014112499 A1 | 24-04-2014 | NONE | |